# EUROPEAN PATENT APPLICATION

(11) **EP 2 177 140 A1**
(43) Date of publication of application: **21.04.2010**
(21) Application number: 08380296.7
(22) Date of filing: 17.10.2008
(51) Int. Cl.: A47J 42/04

(54) **Container with grinding device with removable top**

(71) Applicant: Miniland, S.A., 03430 Onil Alicante (ES)
(72) Inventor: Verdu Frances, José, 03430 Onil (Alicante) (ES)
(74) Representative: Canadell-Isern, Roberto

(57) **Abstract**

"Container (1) with grinding device with removable top (7)", of the type that incorporates a moving piece (2), a fixed piece (3) and a hermetic lid (4). The function of this moving piece is to break up the product by trapping it against the interior cogging (5) of the piece (3) that remains attached to the neck (6) of the container (1), manually turning it in one direction and the other, either successively or in only one direction, thus achieving the grinding of the product contained in the container (1). The top (7) that plugs the exit tube of the unground product has a cylindrical shape and is removable thanks to the fact that it has a helicoidal peripheral groove (8) at the bottom, which fits into a rim (9) that to this end incorporates the moving piece (2) by threading. The upper part of the top (7) has a curvo-convex laminar handle (10) to be able to remove this top (7) when the user wishes, remaining closed for grinding and capable of being easily removed by the user to take out part of the unground contents from the inside of the container.

## Description

### OBJECT

The object referred to by the invention protected in this patent consists of a "Container with grinding device with removable top", the main advantage of which is that it can be removed without grinding the contents inside the container.

### BACKGROUND

There are numerous, known types of containers for solid food products that are grated for use, such as spices, coffee, salt, hard cheeses, etc.

In general, they usually comprise a rigid, cylindrical, tubular container in which one of the bases is occupied by a grinder.

To use them, the idle position of the container is reversed so that the product accumulates over the grinder and a moving piece with interior cogging is manually turned in one direction and the other, either successively or in only one direction; this breaks up the product by trapping it against the interior cogging of a piece attached to the opening of the container.

The grinder is usually closed with a circular, hermetic, fixed lid when it is not being used, in order to prevent the aromas of the product it contains from evaporating or exiting the grinder.

By way of background, there is a European Patent No. 07 380.132.6, the holder of which is the same applicant for this patent, which describes a container whose main characteristic is that it is capable of double grinding; to this end, the change from fine grating to coarse grating is achieved by a moving piece exerting traction in the axial direction, which causes it to shift with respect to the fixed piece whose interior straight cogging presents a slight conical shape that facilitates the relative separation between the cogs of both pieces and the change of size of the ground product fragments, with their relative working positions being fixed by a mutual fit between internal perimetric projections of the moving piece and the corresponding external projections of the neck of the container.

This container is also **characterized in that** the total or partial removal of its contents is done by partially lifting a central semi-cylindrical top, which in closed position remains attached to the moving piece in the central opening of which it is housed, by means of external perimetric projections, and therefore it accompanies that piece when it moves, whereas for the open position it moves axially upwards, exerting traction on a curvo-convex laminar handle provided at the top, although removal is not complete as it is prevented by an end perimetric projection.

### DESCRIPTION OF THE INVENTION

As described above in the background of this report, the purpose of European Patent 07 380.132.6 is the optional obtainment of two different sizes of fragments, alternatively; this is advantageous with respect to the already known containers of this sort.

Nevertheless, it has been demonstrated in practice that, for users, it is advantageous to be able to remove the unground contents from the inside of the container if they wish, i.e., to be able to take out the contents, e.g. spices in seed form among others, without grinding.

Therefore, the object of the invention is a variant of the embodiment of the above mentioned patent, in which the contents or a part thereof are easily taken out of the container by the user by completely removing the top.

This top has a cylindrical shape and is removable thanks to the fact that it includes a helicoidal peripheral groove at the bottom, which fits into a rim by threading, for which purpose it incorporates the moving piece in the exit tube of the unground content. The upper part of the top has a curvo-convex laminar handle to be able to remove this top when the user wishes, i.e., it remains closed for grinding and can be easily removed to take out part of the unground contents from the inside of the container. In any event, the same effect would be achieved if the top did not include the helicoidal peripheral groove or the rim and it was a pressure fit lid.

Nevertheless, the same effect could be achieved with slight variations that would enable normal removal of the top, e.g., a simple pressure fit lid, although this latter possibility would result in less consistency.

### BRIEF DESCRIPTION OF THE DRAWINGS

To complement the description of the invention and facilitate the interpretation of the structural and functional characteristics of its object, it is accompanied by drawings that schematically show a preferential embodiment of the container with grinding device with removable top, which constitutes the object of this Patent. In these drawings:

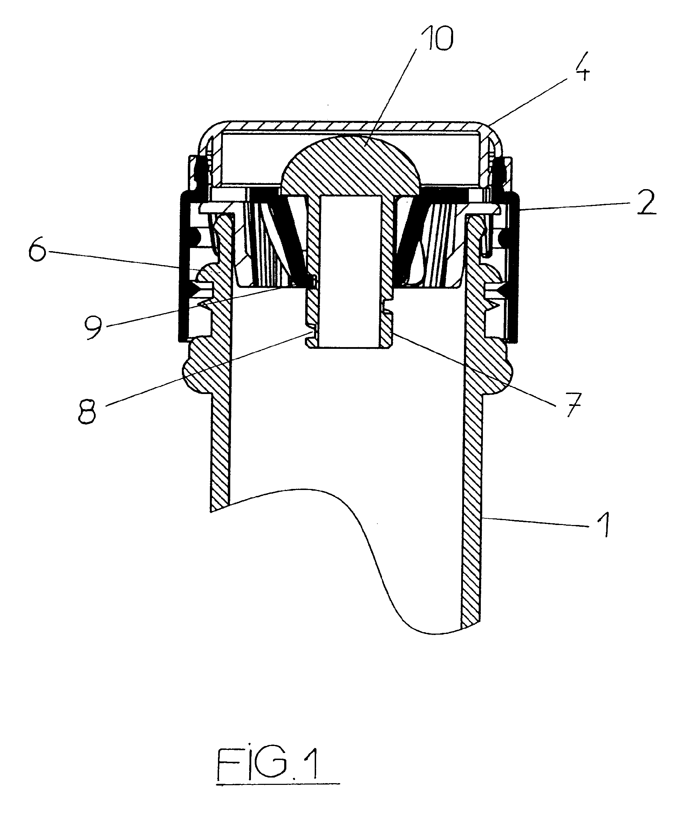

- Figure 1 shows a partial section of the container with grinding device with removable top.

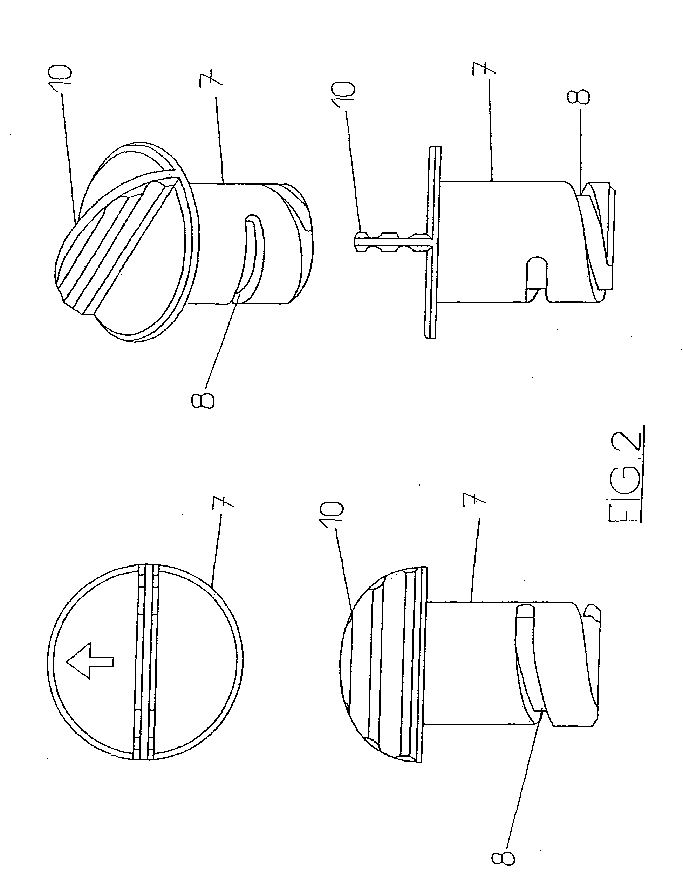

- Figure 2 shows several views of the removable top.

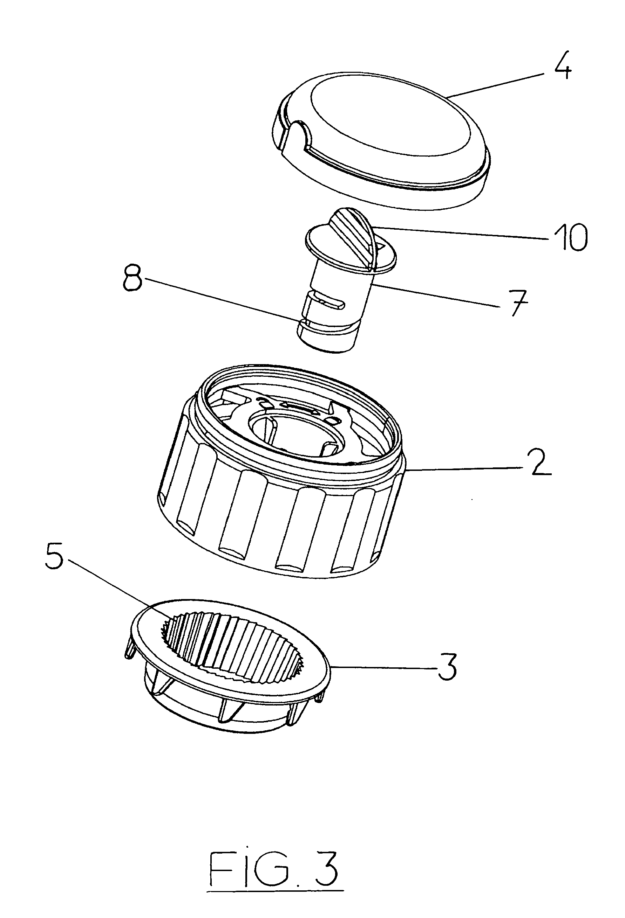

- Figure 3 shows a blowup of the fixed piece, the moving piece, the central top and the lid, to illustrate the relative positions of the structural elements on the upper part of the container.

### DESCRIPTION OF A PREFERENTIAL EMBODIMENT

To clearly show the nature and scope of the advantageous application of the container that constitutes the object of this patent, following is a description of its structure with reference to the drawings which, because they represent a preferential embodiment of this object on an informative basis, should be considered in their broadest sense and not as limitative of the application and the content of the claimed invention.

The container (1) of this patent, just as the one referred to in the above mentioned European patent, includes a moving piece (2), a fixed piece (3) and a hermetic lid (4), and all of these are common to both embodiments. The function of the moving piece (2) is to break up the product by trapping it against the interior cogging (5) of the piece (3) that remains attached to the neck (6) of the container (1). This moving piece (2) is manually turned in one direction and the other, either successively or in only one direction, to thus achieve the grinding of the product contained in the container (1).

One of the differences with respect to the previous patent is that the moving piece (2) no longer has two relative positions, i.e., since the purpose of the container (1) is not to obtain two different sizes of grinding, this piece (2) no longer moves in an axial direction with respect to the fixed piece (3) to obtain two different kinds of grinding.

The main characteristic and object of this patent is the top (7). This top (7) has a cylindrical shape, and it is removable thanks to the fact that it includes a helicoidal peripheral groove (8) at the bottom, which fits into a rim (9) by threading, for which purpose it incorporates the moving piece (2) in the exit tube of the unground content.

Likewise, the upper part of the top (7) has a curvo-convex laminar handle (10) to be able to remove this top (7) when the users wishes, i.e., it remains closed for grinding and can be easily removed by the user to take out part of the contents from the inside of the container.

## Claims

1. "Container with grinding device with removable top", of the type that incorporates a moving piece, a fixed piece and a hermetic lid, where the function of this moving piece is to break up the product by trapping it against the interior cogging of the piece that remains attached to the neck of the container, manually turning it in one direction and the other, either successively or in only one direction, thus achieving the grinding of the product contained in the container, **characterized in that** the top (7) that plugs the exit tube of the unground product has a cylindrical shape and is removable thanks to the fact that it has a helicoidal peripheral groove (8) at the bottom, which fits into a rim (9) that to this end incorporates the moving piece (2) by threading; and **in that** the upper part of the top (7) has a curvo-convex laminar handle (10) to be able to remove this top (7) when the user wishes, remaining closed for grinding and capable of being easily removed by the user to take out part of the unground contents from the inside of the container.
